(19) Europäisches Patentamt
European Patent Office
Office européen des brevets

(11) **EP 3 104 657 B1**

(12) **EUROPEAN PATENT SPECIFICATION**

(45) Date of publication and mention of the grant of the patent:
**05.12.2018 Bulletin 2018/49**

(21) Application number: **14885780.8**

(22) Date of filing: **22.08.2014**

(51) Int Cl.:
*H04W 74/08* (2009.01)      *H04J 11/00* (2006.01)
*H04L 27/26* (2006.01)      *H04W 74/00* (2009.01)

(86) International application number:
**PCT/CN2014/085073**

(87) International publication number:
**WO 2015/135295 (17.09.2015 Gazette 2015/37)**

(54) **METHOD, DEVICE AND SYSTEM FOR DETECTING RANDOM ACCESS SIGNAL IN INTERFERENCE ENVIRONMENT**

VERFAHREN, VORRICHTUNG UND SYSTEM ZUR ERKENNUNG VON DIREKTZUGRIFFSSIGNALEN IN EINER INTERFERENZUMGEBUNG

PROCÉDÉ, DISPOSITIF ET SYSTÈME POUR DÉTECTER UN SIGNAL D'ACCÈS ALÉATOIRE DANS UN ENVIRONNEMENT DE BROUILLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2014 CN 201410091391**

(43) Date of publication of application:
**14.12.2016 Bulletin 2016/50**

(73) Proprietor: **ZTE Corporation
Shenzhen, Guangdong 518057 (CN)**

(72) Inventors:
- **WANG, Wenfang
  Shenzhen
  Guangdong 518057 (CN)**
- **WANG, Shaopeng
  Shenzhen
  Guangdong 518057 (CN)**
- **QIN, Hongfeng
  Shenzhen
  Guangdong 518057 (CN)**

(74) Representative: **Schröer, Gernot H. et al
Meissner Bolte Patentanwälte
Rechtsanwälte Partnerschaft mbB
Bankgasse 3
90402 Nürnberg (DE)**

(56) References cited:
**EP-A1- 2 439 973      CN-A- 1 256 812
CN-A- 1 855 767      CN-A- 102 209 052
CN-A- 102 612 051      US-A1- 2011 143 762**

- **"RACH Frequency Domain Decoder Through Downsampling in Time", IP.COM JOURNAL, IP.COM INC., WEST HENRIETTA, NY, US, 27 March 2009 (2009-03-27), XP013130661, ISSN: 1533-0001**
- **CHEN YU ET AL: "Random Access Algorithm of LTE TDD System Based on Frequency Domain Detection", SEMANTICS, KNOWLEDGE AND GRID, 2009. SKG 2009. FIFTH INTERNATIONAL CONFERENCE ON, IEEE, PISCATAWAY, NJ, USA, 12 October 2009 (2009-10-12), pages 346-350, XP031593870, ISBN: 978-0-7695-3810-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 3 104 657 B1**

**Description**

Technical Field

The present invention relates to the field of mobile communication technology, and in particular, to a method, device and system for detecting a random access signal in an interference environment.

Background of the Related Art

In the Long Term Evolution (LTE) system, the mobile terminal first performs downlink synchronization through a synchronization Channel (SCH) to determine a radio frame, initial position for receiving the sub-frame, and cell ID after being started up; and then obtains system information by detecting a Broadcast Channel (BCH), wherein the system information includes the configuration information of the Random Access Channel (RACH); and finally performs uplink synchronization through the random access signal transmitted through the RACH to complete the procedure of accessing the system.

In the procedure of performing uplink synchronization, the mobile terminal first finds the position of the RACH based on the radio frame and sub-frame determined in downlink synchronization, and determines the initial position for sending an uplink random access preamble, and then sends one sequence selected randomly from the available sequences as an uplink random access preamble of a random access signal. A base station detects the uplink random access preamble to determine a timing adjustment quantity for uplink synchronization, which is sent to the mobile terminal by the base station, and the mobile terminal adjusts the moment for sending an uplink signal to achieve the time synchronization of the uplink channel.

The uplink random access preamble of the LTE system is generated by one or more Zadoff-Chu (ZC) root sequence. A $u^{th}$ ZC root sequence is defined as $x_u\left(n\right)=e^{-j\frac{\pi un(n+1)}{N_{ZC}}}$ , $0 \le n \le N_{ZC}$-1. Wherein, the length of the ZC root sequence $N_{ZC}$ in the mode of format 0~3 is 839, and the length is 139 in the mode of format 4. There are 64 sequences for generating the uplink random access preamble in each cell, and the 64 sequences may be various cyclic shift sequences from the same root sequence, may also be cyclic shift sequences from different root sequences. The ZC root sequence is Constant Amplitude zero Auto-correlation Code (CAZAC in short), whose correlation has the following features: the correlation between the various cyclic sequences in the same root sequence is 0; the correlation between various root sequences (including their mutual cyclic shift sequences) is $1/\sqrt{N_{ZC}}$ , i.e. the correlation between the uplink random access preamble of the random access signal and the sequence which does not generate the random access preamble is so low that the correlation may be taken to be approximately equal to zero, and the correlation between the uplink random access preamble of the random access signal and the sequence which generates the uplink random access preamble is highest. Therefore, the random access preamble sent by the terminal may be determined in the method that random access signal is detected in time-domain with the correlation between uplink random access preamble of the random access signal and all of the sequences, to obtain an uplink timing adjustment quantity to achieve the time synchronization of the uplink channel.

In a related method for detecting a random access signal, when there is a higher interference of the adjacent cell, the peak of the signal may be drowned out by the interference and noise which will lead to signal miss detection; meanwhile, due to the influence of the interference, false peak may be detected which will result in false detection. In addition, when there are a higher power signal and a lower power signal in the cell concurrently, for the lower signal, the higher signal is the interference in the cell that increases the possibility of lower signal miss detection. In some methods for serially cancelling interference in existing art, a reconstructed interference signal is subtracted from a received random access signal before detecting, whenever a useful signal is detected, the reconstructed useful signal is subtracted from the received random access signal, and the detection is continued. This method firstly requires the interference signal is known, which has a higher requirement on the system; secondly, a plurality of reconstructions are required, more resources will be occupied, the calculation is large, so that the method is difficult to realize and apply.

In conclusion, the related art has at least the following deficiencies: the method for detecting a random access signal doesn't take account of the influence of interference, and has a problem that the index of missing detection and false detection is higher in the environment of adjacent cell interference signal, which has a higher requirement on the system, and occupies more resources, so that the method is difficult to realize and apply.

US 2019/143762 A1 discloses methods for processing a physical random access channel, including: receiving a signal indicative of a strong user and a desired user on a physical random access channel; performing at least one of a single segment frequency domain detection or a multi-segment frequency domin detection on the signal indicative of a strong user and a desired user; generating a residual signal by cancelling out the signal indicative of a strong user; and obtaining a message transmitted by a user equipment by performing at least one of the single segment frequency domain detection or multi-segment frequenty domain detection on the residual signal.

"RACH Frequency Domain Decoder Through Downsampling in Time", IP.Com Journal, 27 March 2009, discloses that a big FFT at the beginning of a conventional LTE RACH receiver is replaced by a frequency shift, a low pass filter, a downsampling and a smaller FFT.

CHEN, Yu et al., "Random Access Algorithm of LTE TDD System based on Frequency Domain Detection". In: Semantics, Knowledge and Grid, 5th international conference. Piscataway NJ: IEEE, 2009, pp. 346-350, discloses a frequency-domain detection algorithm suitable for criterion, based on the structural characteristics of LTE TDD PRACH format4, PRACH signal launch model and key features of the Zadoff-Chu sequence.

EP 2 439 973 A1 discloses a detection method based on a random access process, which comprises: according to a received Random Access Channel (RACH) signal, obtaining an RACH time-domain correlation value sequence, calculating a first detection threshold $Th_i^1$ for search windows of each RACH time-domain correlation value sequence, if a peak value of the RACH time-domain correlation values thereof is greater than the first detection threshold, recording the peak value and a timing location; if there are one or more sets of continuous search windows which all have the peak values greater than the first detection threshold in the search windows, converting the timing location corresponding to the peak value greater than a second detection threshold to be a timing adjustment quantity. The disclosure further provides a detection apparatus based on a random access process correspondingly.

Summary of the Invention

In view of the above, a method, device, and system for detecting a random access signal in an interference environment according to the independent claims are provided. Further improvements and embodiments are provided in the dependent claims.

The method for detecting a random access signal in an interference environment includes:

receiving a time-domain random access signal to obtain a frequency-domain random access signal;

obtaining interference cancelling weights respectively according to the frequency-domain random access signal and a frequency-domain local cyclic shift sequence, and performing interference cancelling on the frequency-domain random access signal with the obtained interference cancelling weight; and

performing peak detection on the frequency-domain random access signal on which interference cancelling has been performed. Also provided is a device for detecting a random access signal in an interference environment, and the device includes:

an obtaining module configured to receive a time-domain random access signal to obtain a frequency-domain random access signal;

an interference cancellation module configured to obtain interference cancelling weights according to the frequency-domain random access signal and a frequency-domain local cyclic shift sequence, and perform interference cancelling on the frequency-domain random access signal according to the obtained interference cancelling weight; and

a detection module configured to perform peak detection on the frequency-domain random access signal on which interference cancelling has been performed.

The method, device and system for detecting a random access signal in an interference environment disclosed in the embodiments of the present invention are used to receive a time-domain random access signal to obtain a frequency-domain random access signal; perform interference cancelling on the frequency-domain random access signal according to the frequency-domain random access signal and a frequency-domain local cyclic shift sequence; and perform peak detection on the frequency-domain random access signal on which interference cancelling has been performed. The method, device and system for detecting a random access signal in the interference environment disclosed in the embodiments of the present invention may cancel the deterioration of the miss detection performance and false alarm performance caused by the interference while the random access signal is detected, improve the accuracy of detection, and save resources.

Brief Description of Drawings

Fig.1 is a diagram of a flow chart of a method for detecting a random access signal in an interference environment according to an embodiment of the present document;

Fig.2 is a diagram of a flow chart of a detection method for performing firstly power combination on the peak detection sequences with the repetition format according to an embodiment of the present document;

Fig.3 is a diagram of a flow chart of a detection method for determining the sequence validities of all the frequency-domain cyclic shift sequences according to an embodiment of the present document;

Fig.4 is a diagram of a flow chart of a detection method for performing group selection and group combination on all the frequency-domain cyclic shift sequences according to an embodiment of the present document;

Fig.5 is a diagram of a device for detecting a random access signal in an interference environment according to an embodiment of the present document;

FIG.6 is a diagram of a structure of a detection device when down-sampling is performed according to an embodiment of the present document;

Fig.7 is a diagram of a detection device for performing firstly power combination on the peak detection sequences with the repetition format according to an embodiment of the present document;

Fig.8 is a diagram of a detection device for determining the sequence validities of all the frequency-domain cyclic shift sequences according to an embodiment of the present document;

Fig.9 is a diagram of a detection device for performing group selection and group combination on all the frequency-domain cyclic shift sequences according to an embodiment of the present document; and

Fig.10 is a schematic diagram of a structure of a system for detecting a random access signal in an interference environment according to an embodiment of the present document.

Preferred Embodiments of the Invention

The main implementation principle, specific embodiment and beneficial effects thereof which can be achieved of the technical scheme disclosed in the present document will be described in detail in combination with the accompanying drawings below.

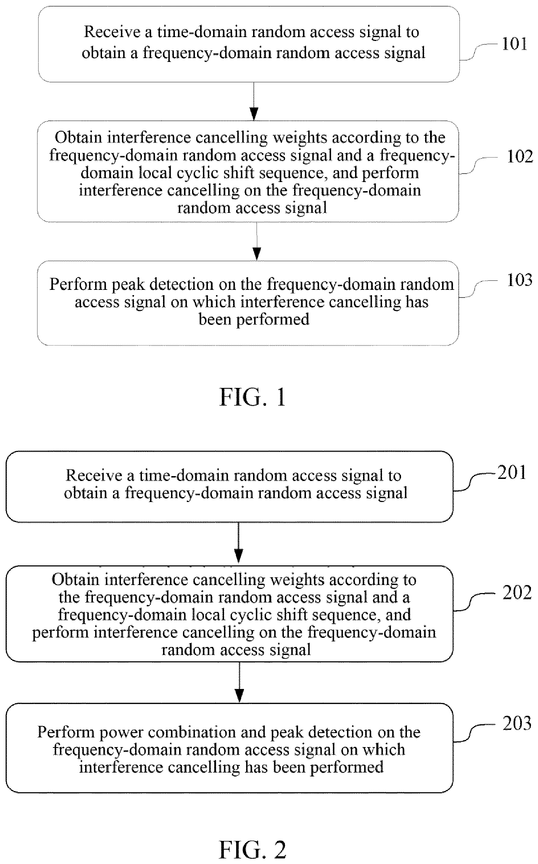

The embodiment 1 as shown in Fig.1 is a method for detecting a random access signal in an interference environment, which is provided by the present invention, and the method includes the following steps:
in step 101, a base station receives a time-domain random access signal to obtain a frequency-domain random access signal.

The base station receives the time-domain random access signal, then converts the time-domain random access signal to the frequency-domain random access signal. The specific procedure for forming the frequency-domain random access signal may include: the base station converts the received time-domain random access signal from time-domain to frequency-domain by Fast Fourier Transform processing. Of course, the down-sampling may also be performed on the received random access signal first before the FFT.

In step 102, the base station obtains interference cancelling weights according to the frequency-domain random access signal and a frequency-domain local cyclic shift sequence, and performs interference cancelling on the frequency-domain random access signal with the obtained interference cancelling weight.

The specific procedure of this step may include: the interference cancelling weight is obtained respectively according to the frequency-domain random access signal and the frequency-domain local cyclic shift sequence, and then weighted combination is performed on the frequency-domain random access signal according to the interference cancelling weight, thus the frequency-domain random access signal on which interference cancelling has been performed is obtained.

Let M be the number of receiving antennas; and let N be the number of sub-carrier waves, for the long RACH, N=839, the number of dimensions of $S$ is $1 \times N$, the number of dimensions of Y is $M \times N$, and the number of dimensions

of $\hat{Y}$ is $1 \times N$.

A method for calculating the interference cancelling weight is :

$$W = R_{SY} R_{YY}^{-1} \qquad\qquad (1)$$

wherein, *W* represents an interference cancelling weight, *S* represents a frequency-domain local cyclic shift sequence, Y represents a frequency-domain random access signal before interference cancelling is performed, $R_{SY} = E\{SY^H\}$, $R_{YY} = E\{YY^H\}$, $R_{SY}$ represents a cross-correlation matrix of the frequency-domain random access signal and frequency-domain local cyclic shift sequence, and $R_{YY}$ represents an auto-correlation matrix of the frequency-domain random access signal;

a method for performing weighted combination on the frequency-domain random access signal according to the interference cancelling weight is:

$$\hat{Y} = WY \qquad\qquad (2)$$

wherein, $\hat{Y}$ represents a frequency-domain random access signal on which interference cancelling has been performed, *W* represents an interference cancelling weight, Y represents a frequency-domain random access signal before interference cancelling is performed.

In step 103, the base station performs peak detection on the frequency-domain random access signal on which interference cancelling has been performed.

Wherein, the specific procedure of peak detection may include: the frequency-domain random access signal is conjugation dot multiplied by the frequency-domain local root sequence or the frequency-domain local cyclic shift sequence, a formula for conjugation dot multiplying is represented as $\hat{Y}_i * S_i^H$, wherein, i represents an index number of an element of a vector, and then the random access signal is converted from the frequency-domain to time-domain by Inverse Fast Fourier Transform (IFFT for short) processing, and then a modular squaring is calculated, a formula for calculating the modular squaring is represented as $|Z_i|^2$, wherein $Z_i$ is a time-domain random signal, and finally a peak detection sequence is obtained. Noise average estimation is performed on the peak detection sequence, and a signal detection threshold is obtained according to the estimation, the signal detection threshold is obtained by amplifying the result of noise average estimation for a certain multiple, and the specific multiple may be determined with empirical values or a result of simulation, and then a signal in a search window corresponding to the current frequency-domain cyclic shift sequence (i.e., the frequency-domain local cyclic shift sequence for estimating the weight in step 102) is detected, and a signal exceeding the threshold is selected. The signal exceeding the signal detection threshold is a valid signal, i.e. there is user sending the RACH signal; otherwise, the signal is considered as an invalid signal, i.e. there is no user sending the RACH signal.

Step 102~ step 103 are repeated, until all cyclic shift sequences of all root sequences are completely processed.

From the foregoing description, it will be seen that the method provided in the embodiment of the present invention can overcome the deficiencies, including that known interference signal is required, and a plurality of reconstructions are required, and calculation is large. The method realizes the functions, including that the method cancels the deterioration of the miss detection performance and false alarm performance caused by the interference while the random access signal is detected, improves the accuracy of detection, and saves resources.

In the embodiment 2, when the random access signal is a random access signal of the repetition format, the following method is implemented, and as shown in Fig.2, the method includes the following steps:

Step 201 is the same as step 101;

Step 202 is the same as step 102;

In step 203, power combination and peak detection are performed on the frequency-domain random access signal on which interference cancelling has been performed.

Wherein, the specific procedure of power combination and peak detection may include: the frequency-domain random access signal on which interference cancelling has been performed is conjugation dot multiplied by the frequency-domain local root sequence or the frequency-domain cyclic shift sequence, and then the random access signal is converted from frequency-domain to time-domain by Inverse Fast Fourier Transform processing, and then a modular squaring is calculated, a peak detection sequence is obtained. The power combination is performed on the peak detection sequences corresponding to the two repetition parts, and then noise average estimation is performed on the peak detection sequence on which the power combination has been performed, and the signal detection threshold is obtained according to an estimated value, and then a signal in the search window corresponding to the current frequency-domain cyclic shift sequence is detected, and a signal exceeding the threshold is selected.

Wherein, the method for performing power combination may be equal-gain combination or maximal-ratio combination, etc.

Step 202~ step 203 are repeated, until all cyclic shift sequences of all root sequences are completely processed.

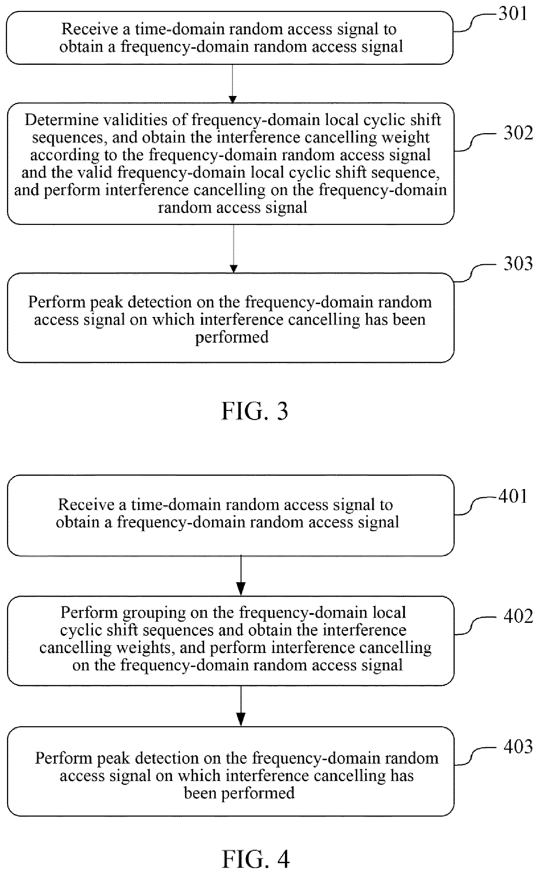

The embodiment 3 provides another method for detecting a random access signal in an interference environment, and as shown in Fig.3, the method includes the following steps:

Step 301 is same as the step 101.

Step 302 is similar to the step 102, and the difference is that the sequence validities are determined for all the frequency-domain local cyclic shift sequences at first before the interference cancelling weights are obtained, the interference cancelling weight is obtained for the frequency-domain cyclic shift sequence which is determined to be valid, and then weighted combination is performed on the frequency-domain random access signal according to the interference cancelling weight, so as to obtain the frequency-domain random access signal on which interference cancelling has been performed.

Wherein, the specific procedure for determining the sequence validities may include: the validities are determined according to the characteristics of all the frequency-domain cyclic shift sequences $R_{SY}$, or all the frequency-domain cyclic shift sequences are grouped, and validity of each group is determined respectively.

Wherein, the characteristics of $R_{SY}$ may include: a modular squaring of the sum, sum of the modular squaring, module of the sum, sum of the module, squaring of the sum of the real part, module of the sum of the real part, sum of the squaring of the real part, and sum of the module of the real part, etc, of $R_{SY}$.

Taking the modular squaring of the sum of $R_{SY}$ as an example, the method for determining the sequence validity may include: when the ratio of some modular squaring of the sum of frequency-domain cyclic shift sequence $R_{SY}$ to an average of a modular squaring of the sum of all the frequency-domain cyclic shift sequences $R_{SY}$ is greater than a certain threshold, the cyclic shift sequence is considered as valid, otherwise, the cyclic shift sequence is considered as invalid. The threshold herein can be set according to the experience by a tester.

Taking the modular squaring of the sum of $R_{SY}$ as an example, the method for determining the sequence validity may also include: when the ratio of a modular squaring of the sum of a frequency-domain cyclic shift sequence $R_{SY}$ to an average of a modular squaring of the sum of all the frequency-domain cyclic shift sequences $R_{SY}$ is greater than a certain threshold, and a ratio of a modular squaring of the sum of the frequency-domain cyclic shift sequence $R_{SY}$ to a maximum of modular squarings of the sum of all the frequency-domain cyclic shift sequences $R_{SY}$ is less than another certain threshold, the cyclic shift sequence is considered as valid, otherwise, the cyclic shift sequence is considered as invalid.

Of course, the method for determining the sequence validity may also be another method.

Step 303 is similar to step 103, herein the current frequency-domain cyclic shift sequence herein is the frequency-domain cyclic shift sequence which is determined to be valid in step 302.

The procedure after the validity determination of step 302 ~ step 303 is repeated, until all the frequency-domain cyclic shift sequences determined to be valid are completely processed.

The embodiment 4 of the present invention provides another method for detecting a random access signal in an interference environment, and as shown in Fig.4, the method includes the following steps:

Step 401 is the same as step 101.

Step 402 is similar to step 102, and the difference is that the group selection is performed on all the frequency-domain local cyclic shift sequences before obtaining the interference cancelling weights, and obtains the interference cancelling weight on the frequency-domain cyclic shift sequence on which group selection is performed, then group combination is performed on the interference cancelling weights which belong to the same group, and then weighted combination is performed on the frequency-domain random access signal according to the interference cancelling weight after group combination, thus the frequency-domain random access signal on which interference cancelling has been performed is obtained.

Wherein, the specific procedure of group selection may include: all the frequency-domain cyclic shift sequences are grouped at regular intervals, such as the interval is 2, 3 etc.; or grouped at irregular intervals, such as all the cyclic shift sequences of a root sequence are grouped into group 1, group 2, etc. All or part of the cyclic shift sequences in each group are selected to obtain the interference cancelling weights.

One cyclic shift sequence in each group is selected to obtain the interference cancelling weight.

Wherein, the specific procedure for group combination may include: the interference cancelling weights belonging to the same group are summed.

Step 403 is similar to step 103, and the difference is that peak detection is only performed on the frequency-domain cyclic shift sequences belonging to the same group when the peak detection is performed each time.

The procedure after the group selection in step 402 ~ step 403 is repeated, until all the frequency-domain cyclic shift sequences after the group selection are completely processed.

From the foregoing description, it will be seen that, according to the method provided in the embodiment of the present invention, the interference cancelling is performed on the frequency-domain random access signal according to the characteristic of the random access signal itself and the relationship between the frequency-domain random access signal and the frequency-domain local cyclic shift sequence, to achieve the purpose of improving the miss detection performance and the false alarm performance. Meanwhile, the miss detection performance of the small signal may further be improved when there are small signal and large signal concurrently, so that the performance of the system is further improved. Additionally, because the method provided in the embodiments of the present invention doesn't need the characteristic of the interference signal at the adjacent cell, or doesn't need to reconstruct the interference signal in the adjacent cell or the interference signal in the local cell, but implements interference cancelling directly, therefore the calculation is small, resources are saved, and the implementation of the system is beneficial to be realized.

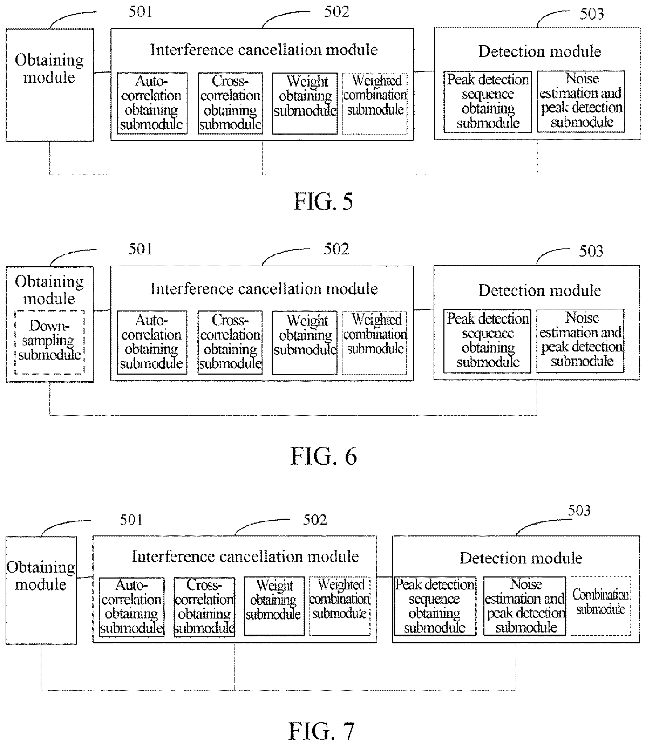

Correspondingly, the embodiment of the present invention also provides a device for detecting a random access signal in an interference environment, and a structure of the device, as shown in FIG. 5, specifically includes:

an obtaining module 501, which is used to receive a time-domain random access signal to obtain a frequency-domain random access signal;

an interference cancellation module 502, which is used to obtain interference cancelling weights according to the frequency-domain random access signal and a frequency-domain local cyclic shift sequence, and perform interference cancelling on the frequency-domain random access signal; and

a detection module 503, which is used to perform peak detection on the frequency-domain random access signal on which interference cancelling has been performed.

Preferably, the interference cancellation module 502 may further include:

an auto-correlation obtaining submodule, which is used to obtain a result of an auto-correlation matrix of the frequency-domain random access signal;

a cross-correlation obtaining submodule, which is used to obtain a result of a cross-correlation matrix of the frequency-domain random access signal and frequency-domain local cyclic shift sequence;

a weight obtaining submodule, which is used to obtain the interference cancelling weight according to an output result of the auto-correlation obtaining submodule and an output result of the cross-correlation obtaining submodule;

a weighted combination submodule, which is used to perform weighted combination on the frequency-domain random access signal according to an output result of the weight obtaining submodule, to obtain the frequency-domain random access signal on which interference cancelling has been performed.

Preferably, the detection module 503 may further include:

a peak detection sequence obtaining submodule, which is used to conjugation dot multiply the frequency-domain random access signal on which interference cancelling has been performed by the frequency-domain local root sequence or the frequency-domain cyclic shift sequence, and then convert the RACH signal from the frequency-domain to time-domain by IFFT processing, and then calculate a modular squaring, and obtain a peak detection sequence;

a noise estimation and peak detection submodule, which is used to perform noise average estimation on the peak detection sequence, and obtain a signal detection threshold according to an estimated noise, and then detect a signal in a search window corresponding to a current frequency-domain cyclic shift sequence, and select a signal exceeding the threshold.

Preferably, as shown in Fig.6, the obtaining module 501 may further include a down-sampling submodule, which is used to perform down-sampling on the received time-domain random access signal.

Preferably, as shown in Fig.7, the detection module 503 may further include a combination submodule, which is used to perform power combination on the peak detection sequences corresponding to the two repetition parts, and then transmit the peak detection sequence on which the power combination has been performed to the noise estimation and peak detection submodule.

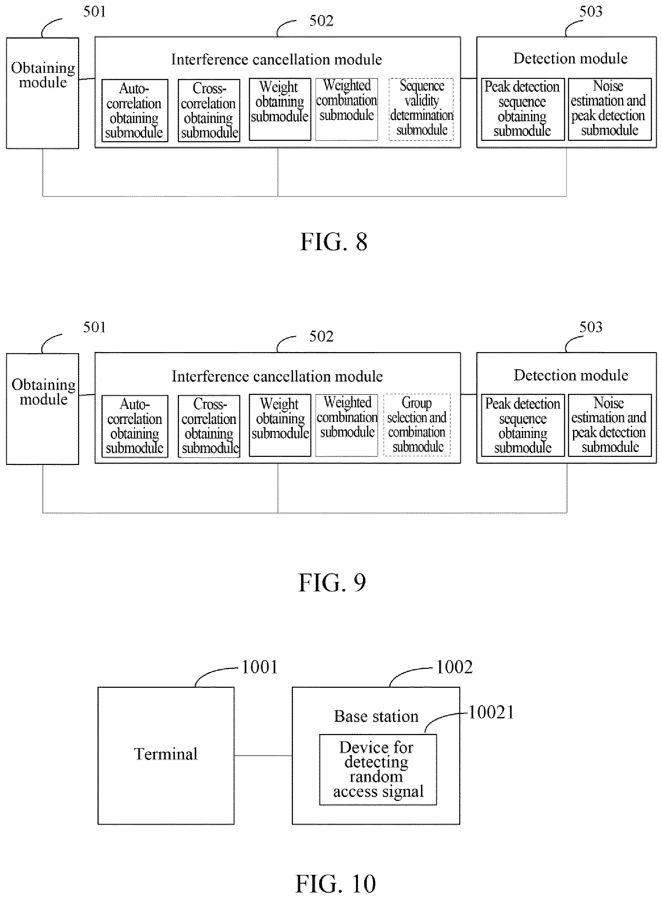

Preferably, as shown in Fig.8, the interference cancellation module 502 may further include:

a sequence validity determination submodule, which is used to determine validities of all frequency-domain cyclic shift sequences first before the interference cancelling weights are obtained; at this moment, the current frequency-domain cyclic shift sequence when the detection module 503 performs the detection is a frequency-domain cyclic shift sequence determined to be valid by the module 502.

Preferably, as shown in Fig.9, the interference cancellation module 502 may further include:

group selection and combination submodule, which is used to perform the group selection on all the frequency-domain cyclic shift sequences, and perform group combination on the interference cancelling weights which belong to the same group. At this moment, the current cyclic shift sequence when the detection module 503 performs the detection is a frequency-domain cyclic shift sequence belonging to the same group in the module 502.

From the foregoing description, it will be seen that, the device provided by the embodiments of the present invention obtains the interference cancelling weights according to the frequency-domain random access signal and the frequency-domain local cyclic shift sequence, and performs weighted combination on the frequency-domain random access signal to achieve the purpose of cancelling the interference to improve the miss detection performance and the false alarm performance of the random access signal. Meanwhile, the miss detection performance of the small signal may also be improved when there are small signal and large signal concurrently, so that the performance of the system is further improved. Additionally, because the method provided by the embodiments of the present invention doesn't need the characteristic of the interference signal at the adjacent cell, and doesn't need to reconstruct the interference signal at the adjacent cell or the interference signal at the local cell, but implements interference cancelling directly, therefore the calculation is small, resources are saved, and implementation of the system is beneficial to be realized.

Correspondingly, the embodiment of the present invention further provides a system for detecting a random access signal in an interference environment, and as shown in Fig.10, the system includes terminal 1001 and base station 1002, and the terminal 1001 is used to send a random access signal to the base station 1002, and the base station 1002 includes a device 10021 for detecting a random access signal in an interference environment; wherein the device is used to receive a time-domain random access signal to obtain a frequency-domain random access signal; and according to the frequency-domain random access signal and a frequency-domain local cyclic shift sequence, perform interference cancelling on the frequency-domain random access signal; and perform peak detection on the frequency-domain random access signal on which interference cancelling has been performed;

preferably, the device 10021 for detecting a random access signal in an interference environment includes:

an obtaining module, which is used to receive a time-domain random access signal to obtain a frequency-domain random access signal;

an interference cancellation module, which is used to perform interference cancelling on the frequency-domain random access signal according to the frequency-domain random access signal and a frequency-domain local cyclic shift sequence; and

a detection module, which is used to perform peak detection on the frequency-domain random access signal on which interference cancelling has been performed.

From the foregoing description, it will be seen that the method and device provided in the embodiments of the present invention obtain interference cancelling weights according to the relationship of frequency-domain random access signal and the frequency-domain local cyclic shift sequence, and then perform weighted combination on the frequency-domain random access signal according to the interference cancelling weights, and thus the frequency-domain random access signal on which interference cancelling has been performed is obtained, to achieve the purpose of cancelling interference to improve the miss detection performance and the false alarm performance. Meanwhile, the miss detection performance of the small signal may also be improved when there are small signal and large signal concurrently, so that the performance of the system further is improved. Additionally, because the method provided by the embodiments of the present invention doesn't need the characteristic of the interference signal at the adjacent cell, and doesn't need to reconstruct the interference signal at the adjacent cell or the interference signal at the local cell, but implements interference cancelling directly, and therefore the calculation is small, resources are saved, which are beneficial to the implementation of the system.

With the specific description of the implementations, the technical measures used by the present invention to achieve the predetermined purposes and the technical effects should be more thoroughly and specifically understood. However, the illustrated accompanying drawings are only used for providing references and description, instead of limiting the present invention. Additionally, in the case of no conflict, embodiments and features in the embodiments may be combined with each other.

The one skilled in the art should understand that, the embodiments of the present document can be provided as a method or computer program products. Therefore, a form of hardware embodiment, a form of software embodiment or a form of embodiment combining software aspect and hardware aspect can be used in the present invention. Moreover, a form of a computer program product executed on one or a plurality of computer available memory mediums (including but not limited to a disk memory and an optical memory and so on) which contain computer available program codes.

The present invention is described with reference to the flow charts and/or block diagrams of the method and computer program product according to the embodiments of the present invention. It should be understood that each flow and/or block in the flow charts and/or block diagrams and a combination of flow and/or block in the flow charts and/or block diagrams can be implemented by computer program instructions. These computer program instructions can be provided to a general-purpose computer, a special-purpose computer, an embedded processing machine or processors of other programmable data processing devices to produce a machine, which makes the instructions executed by the computer or processors of other programmable data processing devices produce a device used for implementing functions specified in one or multiple flows of the flow charts and/or in one or multiple blocks of the block diagrams.

These computer program instructions also can be stored in a computer readable memory which can guide the computer or other programmable data processing devices to work in a specific way, which makes the instructions stored in the computer readable memory produce a manufacture including an instruction device, and the instruction device implements functions specified in one or multiple flows of the flow charts and/or in one or multiple blocks of the block diagrams.

These computer program instructions also can be loaded on the computer or other programmable data processing devices, which makes a series of operation steps be executed on the computer or other programmable devices to produce the processing implemented by the computer, thus, the instructions executed by the computer or other programmable devices provide the steps used for implementing functions specified in one or multiple flows of the flow charts and/or in one or multiple blocks of the block diagrams.

The above description is only the preferred embodiments of the present invention, and is not intended to limit the protection scope of the present invention.

Industrial Applicability

The method, device and system disclosed in the embodiments of the present invention may cancel the deterioration of the miss detection performance and false alarm performance caused by the interference while the random access signal is detected, improve the accuracy of detection, and save resources.

**Claims**

1. A method for detecting a random access signal in an interference environment, comprising:
   a base station receiving (101) a time-domain random access signal to obtain a frequency-domain random access signal, **characterised by**:

   the base station obtaining (102) interference cancelling weights according to the frequency-domain random access signal and a frequency-domain local cyclic shift sequence of a root sequence, and performing (102) interference cancelling on the frequency-domain random access signal with the obtained interference cancelling weights; and
   the base station performing (103) peak detection on the frequency-domain random access signal on which interference cancelling has been performed,
   wherein said obtaining interference cancelling weights according to the frequency-domain random access signal and a frequency-domain local cyclic shift sequence is calculated according to $W = R_{SY} R_{YY}^{-1}$ , wherein $W$ represents an interference cancelling weight, $R_{SY} = E\{SY^H\}$, $R_{YY} = E\{YY^H\}$, $S$ represents a frequency-domain local cyclic sequence, Y represents a frequency-domain random access signal before interference cancelling is performed, a number of dimensions of $S$ is $1 \times N$, a number of dimensions of Y is $M \times N$, M represents a number of receiving antennas; and N represents a number of sub-carrier waves.

2. The method according to claim 1, wherein, said receiving a time-domain random access signal to obtain a frequency-domain random access signal comprises performing down-sampling on the received time-domain random access signal firstly, and then performing Fast Fourier Transform to obtain the frequency-domain random access signal.

3. The method according to claim 1, wherein, said performing interference cancelling on the frequency-domain random access signal is calculated according to $\hat{Y}=WY$, wherein, $W$ represents an interference cancelling weight, $\hat{Y}$ represents a frequency-domain random access signal on which interference cancelling has been performed, and a number of dimensions of $\hat{Y}$ is $1 \times N$.

4. The method according to claim 1, wherein, the step of performing peak detection on the frequency-domain random access signal on which interference cancelling has been performed comprises:

    conjugation dot multiplying the frequency-domain random access signal on which interference cancelling has been performed by a frequency-domain local root sequence or the frequency-domain cyclic shift sequence;
    converting the signal obtained by conjugation dot multiplying from the frequency-domain to the time-domain;
    calculating a modular squaring of the time-domain signal to obtain a peak detection sequence; and
    detecting the peak detection sequence, and
    wherein said detecting the peak detection sequence comprises performing noise average estimation on the peak detection sequence, and obtaining a signal detection threshold according to an estimated value, then detecting a signal in a search window corresponding to a current frequency-domain cyclic shift sequence, and selecting a signal exceeding the threshold.

5. The method according to claim 4, wherein, said detecting the peak detection sequence comprises performing firstly power combination on the peak detection sequence of a random access signal with a repetition format, then performing noise average estimation on the peak detection sequence on which the power combination has been performed, and obtaining a signal detection threshold according to an estimated value, then detecting a signal in a search window corresponding to a current frequency-domain cyclic shift sequence, and selecting a signal exceeding the detection threshold, and
wherein the power combination is equal-gain combination or maximal-ratio combination.

6. The method according to claim 1, wherein, before said obtaining interference cancelling weights according to the frequency-domain random access signal and a frequency-domain local cyclic shift sequence, the method further comprises determining sequence validities of all frequency-domain cyclic shift sequences, and
wherein, while determining sequence validities of all frequency-domain cyclic shift sequences before obtaining interference cancelling weights, when performing peak detection on the frequency-domain random access signal on which interference cancelling has been performed, only a search window corresponding to the frequency-domain cyclic shift sequence which is determined to be valid is detected,
wherein determining sequence validities of all frequency-domain cyclic shift sequences includes: the validities are determined according to the characteristics of all the frequency-domain cyclic shift sequences or all the frequency-domain cyclic shift sequences are grouped and the validity of each group is determined respectively.

7. The method according to claim 1, wherein, said obtaining interference cancelling weights according to the frequency-domain random access signal and a frequency-domain local cyclic shift sequence, and performing interference cancelling on the frequency-domain random access signal further comprises performing group selection on all the frequency-domain cyclic shift sequences before obtaining the interference cancelling weights, and performing group combination on interference cancelling weights which belong to a same group after obtaining interference cancelling weights and
wherein the group selection is grouped at a regular interval or at an irregular interval and all or part of the cyclic shift sequences in each group are selected to obtain the interference cancelling weights, and
wherein, when group selection is performed on all the frequency-domain local cyclic shift sequences before obtaining the interference cancelling weights, said performing interference cancelling on the frequency-domain random access signal is that all or part of the cyclic shift sequences in each group are selected to obtain the interference cancelling weights, while said performing the peak detection on the frequency-domain random access signal on which interference cancelling has been performed is that peak detection is performed on a signal in a search window corresponding to frequency-domain cyclic shift sequences which belong to a same group.

8. A device for detecting a random access signal in an interference environment, comprising:
an obtaining module (501) configured to receive a time-domain random access signal to obtain a frequency-domain random access signal, **characterised by**:

an interference cancellation module (502) configured to obtain interference cancelling weights according to the frequency-domain random access signal and a frequency-domain local cyclic shift sequence of a root sequence, and perform interference cancelling on the frequency-domain random access signal; and

a detection module (503) configured to perform peak detection on the frequency-domain random access signal on which interference cancelling has been performed,

wherein said obtaining interference cancelling weights according to the frequency-domain random access signal and a frequency-domain local cyclic shift sequence is calculated according to $W = R_{SY} R_{YY}^{-1}$, , wherein $W$ represents an interference cancelling weight, $R_{SY} = E\{SY^H\}$, $R_{YY} = E\{YY^H\}$, $S$ represents a frequency-domain local cyclic sequence, Y represents a frequency-domain random access signal before interference cancelling is performed, a number of dimensions of $S$ is $1 \times N$, a number of dimensions of Y is $M \times N$, M represents a number of receiving antennas; and N represents a number of sub-carrier waves.

9. The device according to claim 8, wherein, the obtaining module comprises a down-sampling submodule, and the down-sampling submodule is configured to perform down-sampling on the received time-domain random access signal.

10. The device according to claim 8, wherein, the interference cancellation module comprises:

an auto-correlation obtaining submodule configured to obtain a result of an auto-correlation matrix of the frequency-domain random access signal;

a cross-correlation obtaining submodule configured to obtain a result of a cross-correlation matrix of the frequency-domain random access signal and the frequency-domain local cyclic shift sequence;

a weight obtaining submodule configured to obtain the interference cancelling weights according to an output result of the auto-correlation obtaining submodule and an output result of the cross-correlation obtaining submodule; and

a weighted combination submodule configured to perform weighted combination on the frequency-domain random access signal according to an output result of the weight obtaining submodule, to obtain the frequency-domain random access signal on which interference cancelling has been performed.

11. The device according to claim 8, wherein, the detection module comprises:

a peak detection sequence obtaining submodule configured to conjugation dot multiply the frequency-domain random access signal on which interference cancelling has been performed by the frequency-domain local root sequence or the frequency-domain cyclic shift sequence, and then convert the random access signal from the frequency-domain to time-domain by Inverse Fast Fourier Transform, and then calculate a modular squaring, and obtain a peak detection sequence; and

a noise estimation and peak detection submodule configured to perform noise average estimation on the peak detection sequence, and obtain a signal detection threshold according to an estimated noise, and then detect a signal in a search window corresponding to a current frequency-domain cyclic shift sequence, and select a signal exceeding the detection threshold, and

wherein the detection module further includes a combination submodule, and the combination submodule is configured to, when the random access signal is a random access signal with a repetition format, perform power combination on the peak detection sequence corresponding to two repetition parts, and transmit the peak detection sequence on which the power combination has been performed to the noise estimation and peak detection submodule.

12. The device according to claim 10, wherein, the interference cancellation module further comprises a validity determination module, and the validity determination module is configured to determine sequence validities of all frequency-domain local cyclic shift sequences before obtaining the interference cancelling weights, and

wherein the noise estimation and peak detection submodule is configured to, when the interference cancellation module determines the sequence validities of all the frequency-domain cyclic shift sequences before obtaining the interference cancelling weights, detect only a signal in the search window corresponding to the frequency-domain cyclic shift sequence which is determined to be valid.

**13.** The device according to claim 10, wherein, the interference cancellation module further comprises a group selection and combination submodule, and the group selection and combination submodule is configured to perform group selection on all the frequency-domain cyclic shift sequences, and to perform group combination on the interference cancelling weights which belong to a same group, and

wherein the noise estimation and peak detection submodule is configured to, when the interference cancellation module groups all the frequency-domain cyclic shift sequences before obtaining the interference cancelling weights, perform peak detection only on a signal in a search window corresponding to frequency-domain cyclic shift sequences which belong to a same group.

**14.** A system for detecting a random access signal in an interference environment, comprising a terminal (1001) and a base station (1002), wherein the base station (1002) includes a device for detection (10021) according to any one of claims 8-13, wherein,

the terminal (1001) is configured to transmit a random access signal to the base station (1002).

## Patentansprüche

**1.** Verfahren zur Erkennung eines Direktzugriffssignals in einer Interferenzumgebung, umfassend:
eine Basisstation, die ein Direktzugriffssignal im Zeitbereich empfängt (101), um ein Direktzugriffssignal im Frequenzbereich zu erhalten, **dadurch gekennzeichnet dass**:

die Basisstation Interferenzunterdrückungsgewichtungen gemäß dem Direktzugriffssignal im Frequenzbereich und einer lokalen zyklischen Verschiebungssequenz im Frequenzbereich einer Wurzelsequenz erhält (102) und eine Interferenzunterdrückung an dem Direktzugriffssignals im Frequenzbereich mit den erhaltenen Interferenzunterdrückungsgewichtungen durchführt (102); und
die Basisstation eine Spitzenerkennung an dem Direktzugriffssignal im Frequenzbereich, an dem eine Interferenzunterdrückung durchgeführt wurde, durchführt (103),
wobei das Erhalten von Interferenzunterdrückungsgewichtungen gemäß dem Direktzugriffssignal im Frequenzbereich und einer lokalen zyklischen Verschiebungssequenz im Frequenzbereich gemäß $W = R_{SY}R_{YY}^{-1}$ berechnet wird, wobei $W$ eine Interferenzunterdrückungsgewichtung darstellt, $R_{SY} = E\{SY^H\}$, $R_{YY} = E\{YY^H\}$, $S$ eine lokale zyklische Sequenz im Frequenzbereich darstellt, $Y$ ein Direktzugriffssignal im Frequenzbereich, bevor eine Interferenzunterdrückung durchgeführt wird, darstellt, eine Anzahl von Dimensionen von $S$ gleich $1 \times N$ ist, eine Anzahl von Dimensionen von $Y$ gleich $M \times N$ ist, $M$ eine Anzahl von Empfangsantennen darstellt; und $N$ eine Anzahl von Zwischenträgerwellen darstellt.

**2.** Verfahren nach Anspruch 1, wobei das Empfangen eines Direktzugriffssignals im Zeitbereich, um ein Direktzugriffssignal im Frequenzbereich zu erhalten, zunächst das Durchführen einer Abwärtsabtastung des empfangenen Direktzugriffssignals im Zeitbereich und dann das Durchführen einer schnellen Fourier-Transformation zum Erhalten des Direktzugriffssignals im Frequenzbereich umfasst.

**3.** Verfahren nach Anspruch 1, wobei das Durchführen der Interferenzunterdrückung an dem Direktzugriffssignal im Frequenzbereich gemäß $\hat{Y} = WY$ berechnet wird, wobei $W$ eine Interferenzunterdrückungsgewichtung darstellt, $\hat{Y}$ ein Direktzugriffssignal im Frequenzbereich, an dem die Interferenzunterdrückung durchgeführt wurde, darstellt, und eine Anzahl von Dimensionen von $\hat{Y}$ gleich $1 \times N$ ist.

**4.** Verfahren nach Anspruch 1, wobei der Schritt des Durchführens einer Spitzenerkennung an dem Direktzugriffssignal im Frequenzbereich, an dem eine Interferenzunterdrückung durchgeführt wurde, umfasst:

Konjugations-Skalarmultiplikation des Direktzugriffssignals im Frequenzbereich, bei dem die Interferenzunterdrückung durchgeführt wurde, mit einer lokalen Wurzelsequenz im Frequenzbereich oder der zyklischen Verschiebungssequenz im Frequenzbereich;
Umwandeln des durch Konjugations-Skalarmultiplikation erhaltenen Signals vom Frequenzbereich in den Zeitbereich;
Berechnen einer modularen Quadratur des Signals im Zeitbereich, um eine Spitzenerkennungssequenz zu erhalten; und
Erkennen der Spitzenerkennungssequenz, und

wobei das Erkennen der Spitzenerkennungssequenz das Durchführen einer Rausch-Mittelwertschätzung an der Spitzenerkennungssequenz und das Erhalten eines Signalerkennungsschwellenwerts gemäß einem Schätzwert, dann das Erkennen eines Signals in einem Suchfenster, das einer aktuellen zyklischen Verschiebungssequenz im Frequenzbereich entspricht, und das Auswählen eines Signals, das den Schwellenwert überschreitet, umfasst.

5. Verfahren nach Anspruch 4, wobei das Erkennen der Spitzenerkennungssequenz das Durchführen einer ersten Leistungskombination an der Spitzenerkennungssequenz eines Direktzugriffssignals mit einem Wiederholungsformat, dann das Durchführen einer Rausch-Mittelwertschätzung an der Spitzenerkennungssequenz, an der die Leistungskombination durchgeführt wurde, und das Erhalten eines Signalerkennungsschwellenwerts gemäß einem Schätzwert, dann das Erkennen eines Signals in einem Suchfenster, das einer aktuellen zyklischen Verschiebungssequenz im Frequenzbereich entspricht, und das Auswählen eines Signals, das den Erkennungsschwellenwert überschreitet, umfasst, und

wobei die Leistungskombination eine Gleichverstärkungs-Kombination oder eine Maximalverhältnis-Kombination ist.

6. Verfahren nach Anspruch 1, wobei, vor dem Erhalten von Interferenzunterdrückungsgewichtungen gemäß dem Direktzugriffssignal im Frequenzbereich und einer lokalen zyklischen Verschiebungssequenz im Frequenzbereich, das Verfahren ferner das Bestimmen von Sequenzgültigkeiten aller zyklischen Verschiebungssequenzen im Frequenzbereich umfasst, und

wobei während des Bestimmens von Sequenzgültigkeiten aller zyklischen Verschiebungssequenzen im Frequenzbereich vor dem Erhalten von Interferenzunterdrückungsgewichtungen beim Durchführen der Spitzenerkennung an dem Direktzugriffssignal im Frequenzbereich, an dem die Interferenzunterdrückung durchgeführt wurde, nur ein Suchfenster erkannt wird, das der zyklischen Verschiebungssequenz im Frequenzbereich entspricht, die als gültig bestimmt wird,

wobei das Bestimmen von Sequenzgültigkeiten aller zyklischen Verschiebungssequenzen im Frequenzbereich umfasst: die Gültigkeiten werden gemäß den Eigenschaften aller zyklischen Verschiebungssequenzen im Frequenzbereich bestimmt oder alle zyklischen Verschiebungssequenzen im Frequenzbereich werden gruppiert und die Gültigkeit jeder Gruppe wird entsprechend bestimmt.

7. Verfahren nach Anspruch 1, wobei das Erhalten von Interferenzunterdrückungsgewichtungen gemäß dem Direktzugriffssignal im Frequenzbereich und einer lokalen zyklischen Verschiebungssequenz im Frequenzbereich und das Durchführen einer Interferenzunterdrückung an dem Direktzugriffssignal ferner das Durchführen einer Gruppenauswahl an allen zyklischen Verschiebungssequenzen im Frequenzbereich vor dem Erhalten der Interferenzunterdrückungsgewichtungen und, nach dem Erhalten von Interferenzunterdrückungsgewichtungen, das Durchführen einer Gruppenkombination an Interferenzunterdrückungsgewichtungen, die zu einer gleichen Gruppe gehören, umfasst und

wobei die Gruppenauswahl in einem regelmäßigen Intervall oder in einem unregelmäßigen Intervall gruppiert wird und alle oder ein Teil der zyklischen Verschiebungssequenzen in jeder Gruppe ausgewählt wird, um die Interferenzunterdrückungsgewichtungen zu erhalten, und

wobei, wenn die Gruppenauswahl an allen lokalen zyklischen Verschiebungssequenzen im Frequenzbereich durchgeführt wird, bevor die Interferenzunterdrückungsgewichtungen erhalten werden, das Durchführen der Interferenzunterdrückung an dem Direktzugriffssignal im Frequenzbereich darin besteht, dass alle oder ein Teil der zyklischen Verschiebungssequenzen in jeder Gruppe ausgewählt werden, um die Interferenzunterdrückungsgewichtungen zu erhalten, während das Durchführen der Spitzenerkennung an dem Direktzugriffssignal im Frequenzbereich, an dem die Interferenzunterdrückung durchgeführt wurde, darin besteht, dass die Spitzenerkennung an einem Signal in einem Suchfenster durchgeführt wird, das den zyklischen Verschiebungssequenzen im Frequenzbereich, die zu einer gleichen Gruppe gehören, entspricht.

8. Vorrichtung zum Erkennen eines Direktzugriffssignals in einer Interferenzumgebung, umfassend:
ein Einholungsmodul (501), das dazu konfiguriert ist, ein Direktzugriffssignal im Zeitbereich zu empfangen, um ein Direktzugriffssignal im Frequenzbereich zu erhalten, **gekennzeichnet durch**:

ein Interferenzunterdrückungsmodul (502), das dazu konfiguriert ist, Interferenzunterdrückungsgewichtungen gemäß dem Direktzugriffssignal im Frequenzbereich und einer lokalen zyklischen Verschiebungssequenz im Frequenzbereich einer Wurzelsequenz zu erhalten und eine Interferenzunterdrückung an dem Direktzugriffssignal im Frequenzbereich durchzuführen; und
ein Erkennungsmodul (503), das dazu konfiguriert ist, eine Spitzenerkennung an dem Direktzugriffssignal im Frequenzbereich durchzuführen, bei dem eine Interferenzunterdrückung durchgeführt wurde,

wobei das Erhalten von Interferenzunterdrückungsgewichtungen gemäß dem Direktzugriffssignal im Frequenzbereich und einer lokalen zyklischen Verschiebungssequenz im Frequenzbereich gemäß $W = R_{SY}R_{YY}^{-1}$ berechnet wird, wobei $W$ eine Interferenzunterdrückungsgewichtung darstellt, $R_{SY} = E\{SY^H\}$, $R_{YY} = E\{YY^H\}$, $S$
eine lokale zyklische Sequenz im Frequenzbereich darstellt, $Y$ ein Direktzugriffssignal im Frequenzbereich,
bevor eine Interferenzunterdrückung durchgeführt wird, darstellt, eine Anzahl von Dimensionen von S gleich
$1 \times N$ ist, eine Anzahl von Dimensionen von $Y$ gleich $M \times N$ ist, $M$ eine Anzahl von Empfangsantennen darstellt;
und $N$ eine Anzahl von Zwischenträgerwellen darstellt.

9.  Vorrichtung nach Anspruch 8, wobei das Einholungsmodul ein Abwärtsabtast-Submodul umfasst, und das Abwärtsabtast-Submodul dazu konfiguriert ist, eine Abwärtsabtastung des empfangenen Direktzugriffssignals im Zeitbereich
durchzuführen.

10. Vorrichtung nach Anspruch 8, wobei das Interferenzunterdrückungsmodul umfasst:

ein Autokorrelationseinholungs-Submodul, das dazu konfiguriert ist, ein Ergebnis einer Autokorrelationsmatrix
des Direktzugriffssignals im Frequenzbereich zu erhalten;
ein Kreuzkorrelationseinholungs-Submodul, das dazu konfiguriert ist, ein Ergebnis einer Kreuzkorrelationsmatrix des Direktzugriffssignals im Frequenzbereich und der lokalen zyklischen Verschiebungssequenz im Frequenzbereich zu erhalten;
ein Gewichtungseinholungs-Submodul, das dazu konfiguriert ist, die Interferenzunterdrückungsgewichtung gemäß einem Ausgabeergebnis des Autokorrelationseinholungs-Submoduls und einem Ausgabeergebnis des
Kreuzkorrelationseinholungs-Submoduls zu erhalten; und
ein Gewichtungskombinations-Submodul, das dazu konfiguriert ist, um eine gewichtete Kombination an dem
Direktzugriffssignal im Frequenzbereich gemäß einem Ausgabeergebnis des Gewichtungseinholungs-Submoduls durchzuführen, um das Direktzugriffssignal im Frequenzbereich zu erhalten, bei dem eine Interferenzunterdrückung durchgeführt wurde.

11. Die Vorrichtung nach Anspruch 8, wobei das Erkennungsmodul umfasst:

ein Spitzenerkennungssequenzeinholungs-Submodul, das dazu konfiguriert ist, eine Konjugations-Skalarmultiplikation des Direktzugriffssignals im Frequenzbereich, bei dem die Interferenzunterdrückung durchgeführt
wurde, mit der lokalen Wurzelsequenz im Frequenzbereich oder der zyklischen Verschiebungssequenz im
Frequenzbereich durchzuführen und dann das Direktzugriffssignal aus dem Frequenzbereich in den Zeitbereich
durch inverse schnelle Fourier-Transformation umzuwandeln, und dann eine modulare Quadratur zu berechnen
und eine Spitzenerkennungssequenz zu erhalten; und
ein Rauschschätz- und Spitzenerkennungs-Submodul, das dazu konfiguriert ist, eine Rausch-Mittelwertschätzung für die Spitzenerkennungssequenz durchzuführen und einen Signalerkennungsschwellenwert gemäß einem geschätzten Rauschen zu erhalten, und dann ein Signal in einem Suchfenster zu erkennen, das einer
aktuellen zyklischen Verschiebungssequenz im Frequenzbereich entspricht, und ein Signal auszuwählen, das
den Erfassungsschwellenwert überschreitet, und
wobei das Erkennungsmodul ferner ein Kombinations-Submodul umfasst, und das Kombinations-Submodul
dazu konfiguriert ist, wenn das Direktzugriffssignal ein Direktzugriffssignal mit einem Wiederholungsformat ist,
eine Leistungskombination an der Spitzenerkennungssequenz, die zwei Wiederholungsteilen entspricht, durchzuführen und die Spitzenerkennungssequenz, an der die Leistungskombination durchgeführt wurde, an das
Rauschschätzungs- und Spitzenerkennungs-Submodul zu senden.

12. Vorrichtung nach Anspruch 10, wobei das Interferenzunterdrückungsmodul ferner ein Gültigkeitsbestimmungsmodul
umfasst, und das Gültigkeitsbestimmungsmodul dazu konfiguriert ist, Sequenzgültigkeiten aller lokalen zyklischen
Verschiebungssequenzen im Frequenzbereich zu bestimmen, bevor die Interferenzunterdrückungsgewichtungen
erhalten werden, und
wobei das Rauschschätz- und Spitzendetektions-Submodul dazu konfiguriert ist, wenn das Interferenzunterdrückungsmodul die Sequenzgültigkeiten aller zyklischen Verschiebungssequenzen im Frequenzbereich vor dem Erhalten der Interferenzunterdrückungsgewichtungen bestimmt, nur ein Signal in dem Suchfenster zu erkennen, das
der zyklischen Verschiebungssequenz im Frequenzbereich, die als gültig bestimmt wird, entspricht.

13. Vorrichtung nach Anspruch 10, wobei das Interferenzunterdrückungsmodul ferner ein Gruppenauswahl- und Kombinations-Submodul umfasst und das Gruppenauswahl- und Kombinations-Submodul dazu konfiguriert ist, eine Gruppenauswahl für alle zyklischen Verschiebungssequenzen im Frequenzbereich durchzuführen und eine Gruppenkombination für die Interferenzunterdrückungsgewichtungen, die zu einer gleichen Gruppe gehören, durchzuführen, und

wobei das Rauschschätz- und Spitzendetektions-Submodul dazu konfiguriert ist, wenn das Interferenzunterdrückungsmodul vor dem Erhalten der Interferenzunterdrückungsgewichtungen alle zyklischen Verschiebungssequenzen im Frequenzbereich gruppiert, die Spitzendetektion nur an einem Signal in einem Suchfenster durchzuführen, das den zyklischen Verschiebungssequenzen im Frequenzbereich, die zu einer gleichen Gruppe gehören, entspricht.

14. System zur Erkennung eines Direktzugriffssignals in einer Interferenzumgebung, umfassend ein Endgerät (1001) und eine Basisstation (1002), wobei die Basisstation (1002) eine Vorrichtung zur Erkennung (10021) nach einem der Ansprüche 8-13 umfasst, wobei,
das Endgerät (1001) dazu konfiguriert ist, ein Direktzugriffssignal an die Basisstation (1002) zu senden.

## Revendications

1. Procédé pour détecter un signal d'accès aléatoire dans un environnement de brouillage, comprenant:
une station de base recevant (101) un signal d'accès aléatoire de domaine temporel pour obtenir un signal d'accès aléatoire de domaine fréquentiel, **caractérisé par**:

la station de base obtenant (102) des poids d'annulation de brouillage selon le signal d'accès aléatoire de domaine fréquentiel et une séquence de décalage cyclique locale de domaine fréquentiel d'une séquence racine, et réalisant (102) une annulation de brouillage sur le signal d'accès aléatoire de domaine fréquentiel avec les poids d'annulation de brouillage obtenus; et
la station de base réalisant (103) une détection de pic sur le signal d'accès aléatoire de domaine fréquentiel sur lequel une annulation de brouillage a été réalisée,
ladite obtention de poids d'annulation de brouillage selon le signal d'accès aléatoire de domaine fréquentiel et
une séquence de décalage cyclique locale de domaine fréquentiel étant calculée selon $W = R_{SY} R_{YY}^{-1}$, où $W$ représente un poids d'annulation de brouillage, $R_{SY} = E\{SY^H\}$, $R_{YY} = E\{YY^H\}$, $S$ représente une séquence cyclique locale de domaine fréquentiel, Y représente un signal d'accès aléatoire de domaine fréquentiel avant qu'une annulation de brouillage ne soit réalisée, un nombre de dimensions de $S$ est 1 x $N$, un nombre de dimensions de Y est $M$ x $N$, M représente un nombre d'antennes de réception; et N représente un nombre d'ondes sous-porteuses.

2. Procédé selon la revendication 1, dans lequel ladite réception d'un signal d'accès aléatoire de domaine temporel pour obtenir un signal d'accès aléatoire de domaine fréquentiel comprend la réalisation d'un sous-échantillonnage sur le signal d'accès aléatoire de domaine temporel reçu premièrement, et ensuite la réalisation d'une transformée de Fourier rapide pour obtenir le signal d'accès aléatoire de domaine fréquentiel.

3. Procédé selon la revendication 1, dans lequel ladite réalisation d'une annulation de brouillage sur le signal d'accès aléatoire de domaine fréquentiel est calculée selon $\hat{Y} = WY$, où $W$ représente un poids d'annulation de brouillage, $\hat{Y}$ représente un signal d'accès aléatoire de domaine fréquentiel sur lequel une annulation de brouillage a été réalisée, et un nombre de dimensions de $\hat{Y}$ est 1 x $N$.

4. Procédé selon la revendication 1, dans lequel l'étape de réalisation d'une détection de pic sur le signal d'accès aléatoire de domaine fréquentiel sur lequel une annulation de brouillage a été réalisée comprend:

effectuer le produit scalaire avec conjugaison du signal d'accès aléatoire de domaine fréquentiel sur lequel une annulation de brouillage a été réalisée par une séquence racine locale de domaine fréquentiel ou la séquence de décalage cyclique locale de domaine fréquentiel;
convertir le signal obtenu par le produit scalaire avec conjugaison du domaine fréquentiel au domaine temporel;
calculer une mise au carré modulaire du signal de domaine temporel pour obtenir une séquence de détection de pic; et
détecter la séquence de détection de pic, et
ladite détection de la séquence de détection de pic comprenant la réalisation d'une estimation de moyenne de bruit sur la séquence de détection de pic, et l'obtention d'un seuil de détection de signal selon une valeur estimée, puis la détection d'un signal dans une fenêtre de recherche correspondant à une séquence de décalage cyclique de domaine fréquentiel courante, et la sélection d'un signal dépassant le seuil.

5. Procédé selon la revendication 4, dans lequel ladite détection de la séquence de détection de pic comprend la réalisation premièrement d'une combinaison de puissance sur la séquence de détection de pic d'un signal d'accès aléatoire avec un format de répétition, puis la réalisation d'une estimation de moyenne de bruit sur la séquence de détection de pic sur laquelle la combinaison de puissance a été réalisée, et l'obtention d'un seuil de détection de signal selon une valeur estimée, puis la détection d'un signal dans une fenêtre de recherche correspondant à une séquence de décalage cyclique de domaine fréquentiel courante, et la sélection d'un signal dépassant le seuil de détection, et
la combinaison de puissance étant une combinaison à égalité de gain ou une combinaison à rapport maximal.

6. Procédé selon la revendication 1, dans lequel, avant ladite obtention de poids d'annulation de brouillage selon le signal d'accès aléatoire de domaine fréquentiel et une séquence de décalage cyclique locale de domaine fréquentiel, le procédé comprend en outre la détermination de validités de séquence de toutes les séquences de décalage cyclique de domaine fréquentiel, et
dans lequel, pendant la détermination de validités de séquence de toutes les séquences de décalage cyclique de domaine fréquentiel avant l'obtention de poids d'annulation de brouillage, lors de la réalisation d'une détection de pic sur le signal d'accès aléatoire de domaine fréquentiel sur lequel une annulation de brouillage a été réalisée, uniquement une fenêtre de recherche correspondant à la séquence de décalage cyclique de domaine fréquentiel qui est déterminée comme étant valide est détectée,
la détermination de validités de séquence de toutes les séquences de décalage cyclique de domaine fréquentiel comprenant: les validités sont déterminées selon les caractéristiques de toutes les séquences de décalage cyclique de domaine fréquentiel ou toutes les séquences de décalage cyclique de domaine fréquentiel sont regroupées et la validité de chaque groupe est déterminée respectivement.

7. Procédé selon la revendication 1, dans lequel ladite obtention de poids d'annulation de brouillage selon le signal d'accès aléatoire de domaine fréquentiel et une séquence de décalage cyclique locale de domaine fréquentiel, et la réalisation d'une annulation de brouillage sur le signal d'accès aléatoire de domaine fréquentiel comprennent en outre la réalisation d'une sélection de groupe sur toutes les séquences de décalage cyclique de domaine fréquentiel avant l'obtention des poids d'annulation de brouillage, et la réalisation d'une combinaison de groupe sur des poids d'annulation de brouillage qui appartiennent à un même groupe après l'obtention de poids d'annulation de brouillage, et
la sélection de groupe étant regroupée à un intervalle régulier ou à un intervalle irrégulier et la totalité ou une partie des séquences de décalage cyclique dans chaque groupe sont sélectionnées pour obtenir les poids d'annulation de brouillage, et
dans lequel, lorsqu'une sélection de groupe est réalisée sur toutes les séquences de décalage cyclique locales de domaine fréquentiel avant l'obtention des poids d'annulation de brouillage, ladite réalisation d'une annulation de brouillage sur le signal d'accès aléatoire de domaine fréquentiel est que la totalité ou une partie des séquences de décalage cyclique dans chaque groupe sont sélectionnées pour obtenir les poids d'annulation de brouillage, tandis que ladite réalisation de la détection de pic sur le signal d'accès aléatoire de domaine fréquentiel sur lequel une annulation de brouillage a été réalisée est qu'une détection de pic est réalisée sur un signal dans une fenêtre de recherche correspondant à des séquences de décalage cyclique de domaine fréquentiel qui appartiennent à un même groupe.

8. Dispositif pour détecter un signal d'accès aléatoire dans un environnement de brouillage, comprenant:
un module d'obtention (501) configuré pour recevoir un signal d'accès aléatoire de domaine temporel pour obtenir un signal d'accès aléatoire de domaine fréquentiel, **caractérisé par**:

un module d'annulation de brouillage (502) configuré pour obtenir des poids d'annulation de brouillage selon le signal d'accès aléatoire de domaine fréquentiel et une séquence de décalage cyclique locale de domaine fréquentiel d'une séquence racine, et réaliser une annulation de brouillage sur le signal d'accès aléatoire de domaine fréquentiel; et
un module de détection (503) configuré pour réaliser une détection de pic sur le signal d'accès aléatoire de domaine fréquentiel sur lequel une annulation de brouillage a été réalisée,

dans lequel ladite obtention de poids d'annulation de brouillage selon le signal d'accès aléatoire de domaine fréquentiel et une séquence de décalage cyclique locale de domaine fréquentiel est calculée selon

$$W = R_{SY} R_{YY}^{-1}$$

, où $W$ représente un poids d'annulation de brouillage, $R_{SY} = E\{SY^H\}$, $R_{YY} = E\{YY^H\}$, $S$ représente une séquence cyclique locale de domaine fréquentiel, Y représente un signal d'accès aléatoire de domaine fréquentiel avant qu'une annulation de brouillage ne soit réalisée, un nombre de dimensions de $S$ est 1 x $N$, un nombre de dimensions de Y est $M$ x $N$, M représente un nombre d'antennes de réception; et N représente un nombre d'ondes sous-porteuses.

9. Dispositif selon la revendication 8, dans lequel le module d'obtention comprend un sous-module de sous-échantillonnage, et le sous-module de sous-échantillonnage est configuré pour réaliser un sous-échantillonnage sur le signal d'accès aléatoire de domaine temporel reçu.

10. Dispositif selon la revendication 8, dans lequel le module d'annulation de brouillage comprend:

un sous-module d'obtention d'autocorrélation configuré pour obtenir un résultat d'une matrice d'autocorrélation du signal d'accès aléatoire de domaine fréquentiel;
un sous-module d'obtention de corrélation croisée configuré pour obtenir un résultat d'une matrice de corrélation croisée du signal d'accès aléatoire de domaine fréquentiel et de la séquence de décalage cyclique locale de domaine fréquentiel;
un sous-module d'obtention de poids configuré pour obtenir les poids d'annulation de brouillage selon un résultat de sortie du sous-module d'obtention d'autocorrélation et un résultat de sortie du sous-module d'obtention de corrélation croisée; et
un sous-module de combinaison pondérée configuré pour réaliser une combinaison pondérée sur le signal d'accès aléatoire de domaine fréquentiel selon un résultat de sortie du sous-module d'obtention de poids, pour obtenir le signal d'accès aléatoire de domaine fréquentiel sur lequel une annulation de brouillage a été réalisée.

11. Dispositif selon la revendication 8, dans lequel le module de détection comprend:

un sous-module d'obtention de séquence de détection de pic configuré pour effectuer un produit scalaire avec conjugaison du signal d'accès aléatoire de domaine fréquentiel sur lequel une annulation de brouillage a été réalisée par la séquence racine locale de domaine fréquentiel ou la séquence de décalage cyclique de domaine fréquentiel, et ensuite convertir le signal d'accès aléatoire du domaine fréquentiel au domaine temporel par une transformée de Fourier rapide inverse, et ensuite calculer une mise au carré modulaire, et obtenir une séquence de détection de pic; et
un sous-module d'estimation de bruit et de détection de pic configuré pour réaliser une estimation de moyenne de bruit sur la séquence de détection de pic, et obtenir un seuil de détection de signal selon un bruit estimé, et ensuite détecter un signal dans une fenêtre de recherche correspondant à une séquence de décalage cyclique de domaine fréquentiel courante, et sélectionner un signal dépassant le seuil de détection, et
dans lequel le module de détection comprend en outre un sous-module de combinaison, et le sous-module de combinaison est configuré pour, lorsque le signal d'accès aléatoire est un signal d'accès aléatoire avec un format de répétition, réaliser une combinaison de puissance sur la séquence de détection de pic correspondant à deux parties de répétition, et transmettre la séquence de détection de pic sur laquelle la combinaison de puissance a été réalisée au sous-module d'estimation de bruit et de détection de pic.

12. Dispositif selon la revendication 10, dans lequel le module d'annulation de brouillage comprend en outre un module de détermination de validités, et le module de détermination de validités est configuré pour déterminer des validités de séquence de toutes les séquences de décalage cyclique locales de domaine fréquentiel avant l'obtention des poids d'annulation de brouillage, et dans lequel le sous-module d'estimation de bruit et de détection de pic est configuré pour, lorsque le module d'annulation de brouillage détermine les validités de séquence de toutes les séquences de décalage cyclique de domaine fréquentiel avant l'obtention des poids d'annulation de brouillage, détecter uniquement un signal dans la fenêtre de recherche correspondant à la séquence de décalage cyclique de domaine fréquentiel qui est déterminée comme étant valide.

13. Dispositif selon la revendication 10, dans lequel le module d'annulation de brouillage comprend en outre un sous-module de sélection et de combinaison de groupe, et le sous-module de sélection et de combinaison de groupe est configuré pour réaliser une sélection de groupe sur toutes les séquences de décalage cyclique de domaine fréquentiel, et pour réaliser une combinaison de groupe sur les poids d'annulation de brouillage qui appartiennent à un même groupe, et

dans lequel le sous-module d'estimation de bruit et de détection de pic est configuré pour, lorsque le module d'annulation de brouillage regroupe toutes les séquences de décalage cyclique de domaine fréquentiel avant l'obtention des poids d'annulation de brouillage, réaliser une détection de pic uniquement sur un signal dans une fenêtre de recherche correspondant à des séquences de décalage cyclique de domaine fréquentiel qui appartiennent à un même groupe.

14. Système pour détecter un signal d'accès aléatoire dans un environnement de brouillage, comprenant un terminal (1001) et une station de base (1002), la station de base (1002) comprenant un dispositif pour détection (10021) selon l'une quelconque des revendications 8 à 13,

le terminal (1001) étant configuré pour transmettre un signal d'accès aléatoire à la station de base (1002).

Receive a time-domain random access signal to obtain a frequency-domain random access signal — 101

Obtain interference cancelling weights according to the frequency-domain random access signal and a frequency-domain local cyclic shift sequence, and perform interference cancelling on the frequency-domain random access signal — 102

Perform peak detection on the frequency-domain random access signal on which interference cancelling has been performed — 103

FIG. 1

Receive a time-domain random access signal to obtain a frequency-domain random access signal — 201

Obtain interference cancelling weights according to the frequency-domain random access signal and a frequency-domain local cyclic shift sequence, and perform interference cancelling on the frequency-domain random access signal — 202

Perform power combination and peak detection on the frequency-domain random access signal on which interference cancelling has been performed — 203

FIG. 2

Receive a time-domain random access signal to obtain a frequency-domain random access signal ⟩— 301

Determine validities of frequency-domain local cyclic shift sequences, and obtain the interference cancelling weight according to the frequency-domain random access signal and the valid frequency-domain local cyclic shift sequence, and perform interference cancelling on the frequency-domain random access signal ⟩— 302

Perform peak detection on the frequency-domain random access signal on which interference cancelling has been performed ⟩— 303

FIG. 3

Receive a time-domain random access signal to obtain a frequency-domain random access signal ⟩— 401

Perform grouping on the frequency-domain local cyclic shift sequences and obtain the interference cancelling weights, and perform interference cancelling on the frequency-domain random access signal ⟩— 402

Perform peak detection on the frequency-domain random access signal on which interference cancelling has been performed ⟩— 403

FIG. 4

FIG. 5

FIG. 6

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019143762 A1

- EP 2439973 A1

**Non-patent literature cited in the description**

- RACH Frequency Domain Decoder Through Downsampling in Time. *IP.Com Journal,* 27 March 2009

- Random Access Algorithm of LTE TDD System based on Frequency Domain Detection. **CHEN, YU et al.** In: Semantics, Knowledge and Grid, 5th international conference. IEEE, 346-350